# EUROPÄISCHE PATENTSCHRIFT

(11) **EP 2 205 867 B1**
(45) Veröffentlichungstag und Bekanntmachung des Hinweises auf die Patenterteilung: **01.08.2018**
(21) Anmeldenummer: 08804395.5
(22) Anmeldetag: 18.09.2008
(51) Int. Cl.: F04B 53/10, F04B 53/12, F04B 53/14, F04B 1/04, B60T 8/40

(54) **KOLBENPUMPE ZUR FÖRDERUNG EINES FLUIDS UND ZUGEHÖRIGES BREMSSYSTEM**
PISTON PUMP FOR CONVEYING A FLUID AND ASSOCIATED BRAKING SYSTEM
POMPE À PISTON DESTINÉE AU REFOULEMENT D'UN FLUIDE ET SYSTÈME DE FREINAGE ASSOCIÉ

(30) Priorität: 04.10.2007 DE 102007047419
(43) Veröffentlichungstag der Anmeldung: 14.07.2010
(73) Patentinhaber: Robert Bosch GmbH, 70442 Stuttgart (DE)
(72) Erfinder: JAHN, Heiko, 71701 Schwieberdingen (DE); ZIMMERMANN, Marc, 71720 Oberstenfeld (DE)
(86) Internationale Anmeldenummer: PCT/EP2008/062458
(87) Internationale Veröffentlichungsnummer: WO 2009/043735

(56) Entgegenhaltungen:
- DE-A1- 19 747 850
- DE-A1-102004 037 147
- US-B1- 6 471 496

## Beschreibung

### Stand der Technik

Die Erfindung geht aus von einer Kolbenpumpe zur Förderung eines Fluids nach der Gattung des unabhängigen Patentanspruchs 1, welche insbesondere in Bremssystemen von Fahrzeugen verwendet wird.

### Eine derartige Kolbenpumpe ist beispielsweise aus der DE 10 2004 037 147 A1 bereits bekannt. Eine Kolbenpumpe mit einer Rückstellfeder, die mittelbar über einen Spreizring am Hochdruckdichtelement abgestützt ist, ist darüber hinaus aus der DE 197 47 850 A1 bekannt.

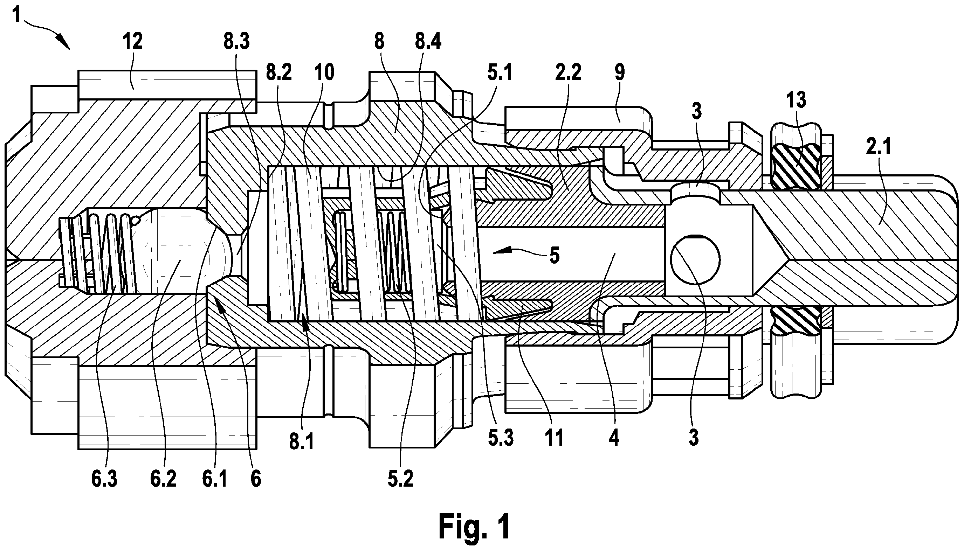

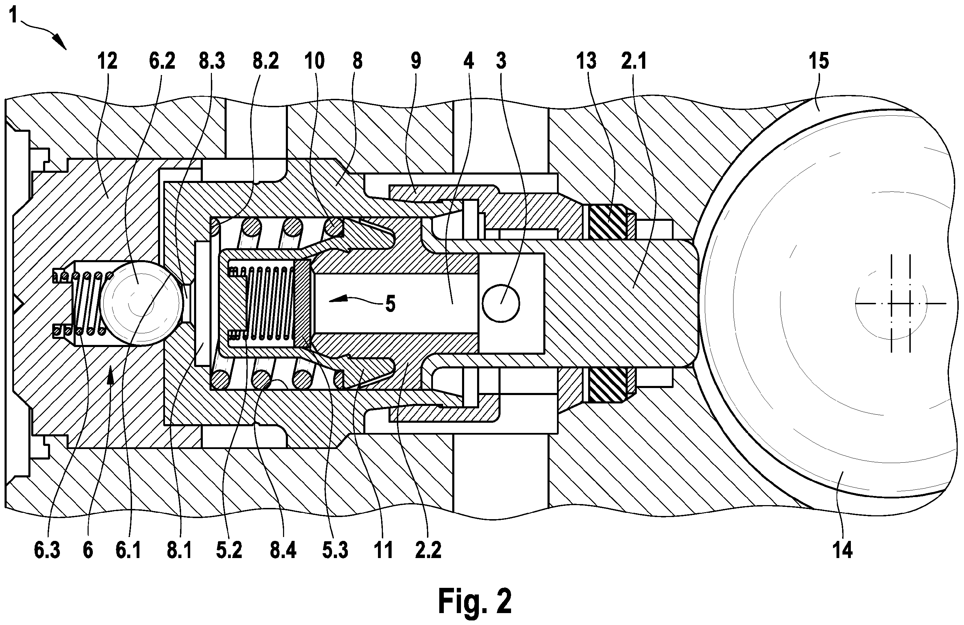

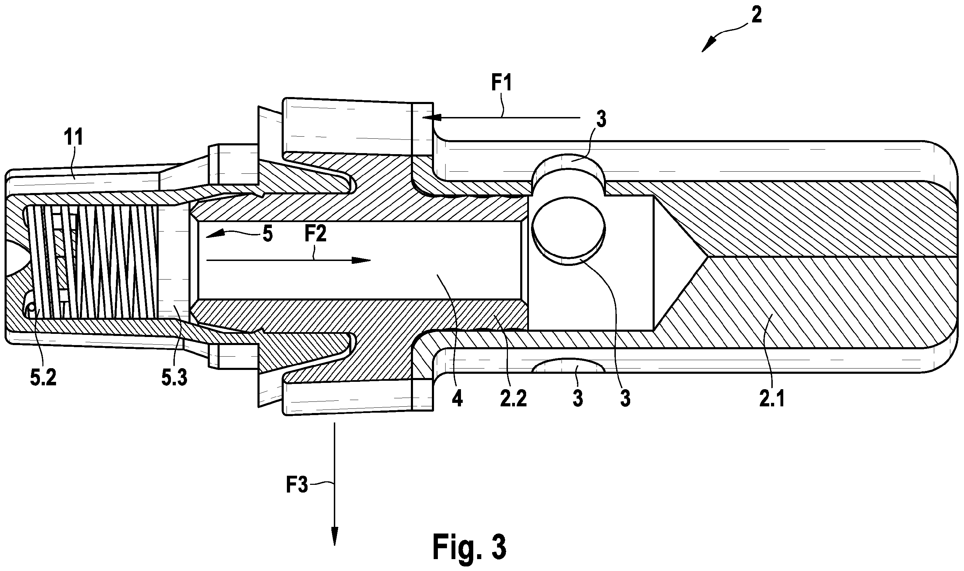

Solche Kolbenpumpen werden in Fahrzeugen mit hydraulischen oder elektrohydraulischen Fahrzeugbremssystemen vorzugsweise als Rückförderpumpen verwendet, um einen Bremsdruck in den Radbremszylindern wahlweise abzusenken oder zu erhöhen, wodurch der Bremsdruck in den Radbremszylindern regelbar ist. Eine solche Regelung kann beispielsweise in einem Antiblockiersystem (ABS), in einem Antriebsschlupfregelungssystem (ASR-System), in einem Fahrdynamikregelsystem usw. durchgeführt werden. Fig. 1 bis 3 zeigen eine herkömmliche Kolbenpumpe, die in einem Fahrzeugbremssystem eingesetzt wird. Wie aus Fig. 1 bis 3 ersichtlich ist, umfasst eine herkömmliche Kolbenpumpe 1 eine Kolbenbaugruppe 2, die ein erstes Kolbenelement 2.1 mit einem Dichtelement 13 und ein zweites Kolbenelement 2.2 aufweist, ein Einlassventil 5, ein Auslassventil 6 und einen Zylinder 8. Das Einlassventil 5 ist als Rückschlagventil ausgebildet und umfasst ein Käfigelement 11, in dem eine Einlassventilfeder 5.2 und ein Einlassventildichtelement 5.3 angeordnet ist, wobei das Einlassdichtelement 5.3 beispielsweise als Dichtscheibe ausgeführt ist, die mit einem korrespondierenden Einlassventilsitz 5.1 dichtend zusammen wirken kann, der am zweiten Kolbenelement 2.2 angeordnet ist, wobei das zweite Kolbenelement 2.2 kraftschlüssig mit dem Käfigelement 11 verbunden ist. Das Auslassventil 6 ist ebenfalls als federbelastetes Rückschlagventil ausgebildet und in einem Deckelelement 12 angeordnet. Das Auslassventil 6 wird geöffnet, wenn ein Druck in einem Kompressionsraum 8 größer als eine auf ein Auslassventildichtelement 6.2 des Auslassventils 6 wirkende Federkraft einer Auslassventilfeder 6.3 ist, wodurch das Auslassventildichtelement 6.2 aus einem an einer Auslassöffnung 8.3 des Zylinders 8 angeordneten Auslassventilsitz 6.1 gedrückt wird.

Während eines Saughubs der Kolbenbaugruppe 2 wird Fluid über eine Filterhülse 9 und im ersten Kolbenelement 2.1 angeordnete Querbohrungen 3 radial angesaugt und über die mit den Querbohrungen 3 korrespondierende Längsbohrung 4 im zweiten Kolbenelement 2.2 und das geöffnete Einlassventil 5 in den Kompressionsraum 8.1 geführt, der im Zylinder 8 zwischen dem Einlassventil 5 und dem Auslassventil 6 angeordnet ist. Nach Erreichen eines oberen Totpunktes kehrt sich die Bewegungsrichtung der Kolbengruppe 2 um, so dass das zweite Kolbenelement 2.2 mit dem Einlassventilsitz 5.1 über das durch einen in einem Exzenterraum 15 angeordneten Exzenter 14 angetriebene erste Kolbenelement 2.1 dichtend auf das Einlassventildichtelement 5.3 gedrückt wird, und das Einlassventil 5 geschlossen wird. Nun erfolgt im Kompressionsraum 8.1 so lange ein Druckaufbau, bis der Druck im Kompressionsraum 8.1 größer als die Federkraft des Auslassventils 6 ist, wodurch das unter Druck stehende Fluid über die Auslassöffnung 8.3 und das geöffnete Auslassventil 6 aus dem Kompressionsraum 8.1 in eine nicht dargestellte Auslassleitung geleitet wird.

Nach Erreichen des unteren Totpunktes kehrt sich die Bewegungsrichtung der Kolbengruppe 2 wieder um, so dass das Auslassventil 6 wieder schließt und der Ansaughub wieder beginnt, wobei eine Rückstellkraft F2 einer im Kompressionsraum 8.1 angeordneten und von einer Zylinderwand 8.4 geführten Rückstellfeder 10, die beispielsweise als Spiralfeder mit angeschliffenen Endwendungen ausgeführt ist und sich an einem Zylinderboden 8.2 und an einem Käfigelement 11 abstützt, gegen das Käfigelement 11 des Einlassventils 5 und somit gegen das zweite Kolbenelement 2.2 wirkt, um die Kolbenbaugruppe 2 wieder in Richtung oberer Totpunkt zu bewegen. Daher wirken auf das zweite Kolbenelement 2.2, das den Einlassventilsitz 5.1 trägt, während des Betriebs axiale Kräfte F1 und F2, welche zum einen vom Exzenter 14 bewirkt und über das erste Kolbenelement 2.1 eingeleitet werden, und zum anderen von der Rückstellfeder 10 bewirkt und über das Käfigelement 11 eingeleitet werden, und radiale Kräfte F3, die durch den herrschenden Systemdruck erzeugt werden. Daher wird das als Ventilsitz ausgeführte zweite Kolbenelement 2.2 als stabiles Bauelement, vorzugsweise als Metallbauteil, hergestellt und kann nur bedingt durch Ansaugbohrungen in Form von Querbohrungen 3 geschwächt werden. Die Querbohrungen 3 sind daher im ersten Kolbenelement 2.1 eingebracht, wodurch sich eine relativ langer als Längsbohrung 4 ausgeführter Einlassbereich ergibt.

### Offenbarung der Erfindung

Die Kolbenpumpe nach den Merkmalen des Oberbegriffs des Anspruchs 1 hat ein Käfigelement, in dem eine Einlassventilfeder und ein Einlassventildichtelement angeordnet ist und weist ein elastisches Hochdruckdichtelement auf, das ausgeführt ist, um radial wirkende Kraftkomponenten aufzunehmen und um über eine radiale Dichtfläche gegen eine Zylinderwand abzudichten und um über eine axiale Dichtfläche gegen eine Kolbenbaugruppe axial abzudichten, die mindestens eine Querbohrung und eine mit der mindestens einen Querbohrung korrespondierende Längsbohrung aufweist. Da das Hochdruckdichtelement die radial wirkenden Druckkraftkomponenten aufnimmt, muss die mit dem Hockdruckdichtelement gekoppelte Kolbenbaugruppe nur noch die wirkenden Axialkräfte aufnehmen und erfährt keine weitere Verformung durch zusätzliche Radialkräfte. Diese Aufteilung der axialen und radialen Kraftkomponenten auf je ein Bauteil führt in vorteilhafter Weise zu einer Reduzierung der Bauteilbelastungen in Bezug auf Dehnung und Spannung und ermöglicht die Ausführung der Bauteile mit einer geringeren Bauteilfestigkeit. Insgesamt wird eine kostengünstige und bauraumoptimierte Kolbenpumpe, die beispielsweise als Rückförderpumpe in einem Bremssystem für ein Fahrzeug eingesetzt werden kann, ermöglicht.

Diese Kolbenpumpe hat weiterhin ein elastisches Hochdruckdichtelement, das zur Zylinderwand hin einen radialen Auflagebereich zur Aufnahme und Zentrierung einer oberen Endwindung einer Rückstellfeder für die Kolbenbaugruppe aufweist, welche in einem Kompressionsraum der Kolbenpumpe angeordnet ist. Diese Ausführung bewirkt eine unmittelbare und in Umfangsrichtung gleichmäßige Beaufschlagung des Hochdruckdichtelements mit der Kraft der Rückstellfeder und gewährleistet unter Betriebsbedingungen die Abdichtwirkung der Hochdruckdichtung an Kolbenbaugruppe und an Zylinderwand.

### Erfindungsgemäß ist eine radiale Dichtfläche durch eine druckbedingte Aufweitung des Hochdruckdichtelements derart ausformbar, dass das Hochdruckdichtelement mit seinem vollständigen radialen Außendurchmesser dichtend an der Zylinderwand anliegt.

Durch die in den abhängigen Ansprüchen aufgeführten Maßnahmen und Weiterbildungen sind vorteilhafte Verbesserungen der im unabhängigen Patentanspruch angegebenen Kolbenpumpe möglich.

Besonders vorteilhaft ist, dass die Kolbenbaugruppe ein erstes Kolbenelement und ein zweites Kolbenelement umfasst, wobei der Einlassventilsitz aus einem verschleißfesten Material besteht und am zweiten Kolbenelement angeordnet ist, das axial wirkende Kraftkomponenten aufnimmt. Im zweiten Kolbenelement ist mindestens eine mit einer Längsbohrung korrespondierende Querbohrung eingebracht, und das elastische Hochdruckdichtelement dichtet über die axiale Dichtfläche gegen das zweite Kolbenelement axial ab. Da zwischen dem Käfigelement mit dem Hochdruckdichtelement und dem zweiten Kolbenelement mit dem Einlassventilsitz im Gegensatz zur herkömmlichen Kolbenpumpe kein Kraftschluss mehr besteht, entfällt bei der Herstellung der erfindungsgemäßen Kolbenpumpe in vorteilhafter Weise ein Montageschritt. Zudem werden durch den Wegfall des Kraftschlusses auftretende Spannungen zwischen dem Käfigelement und dem zweiten Kolbenelement reduziert. Durch die Spannungsminimierung können die mindestens eine als Querbohrung ausgeführt Ansaugbohrung und die korrespondierend Längsbohrung im zweiten Kolbenelement eingebracht werden, wobei das Käfigelement mit dem elastischen Hochdruckdichtelement und das zweite Kolbenelement mit dem Einlassventilsitz als Kunststoffspritzteile ausgeführt werden können. Die Ausführung als Kunststoffspritzteile ermöglicht in vorteilhafter Weise eine einfache, kostengünstige Herstellung der Bauelemente, wobei eine komplexe Formgestaltung möglich ist. Insgesamt ermöglicht die erfindungsgemäße Kolbenpumpe eine extreme Kostenreduzierung der Kolbenbaugruppe und eine einfache Montage. Zudem stellt die erfindungsgemäße Kolbenpumpe ein verbessertes Saugverhalten, eine höhere Druckbeständigkeit und einen extrem kurzen Einlassbereich zur Verfügung.

Zudem kann der radiale Auflagebereich beispielsweise als radiale Aufnahmenut ausgeführt werden, die am äußeren Rand als flexible Dichtlippe ausgeformt ist, die den Kompressionsraum zur Zylinderwand druckdicht abschließt.

In weiterer Ausgestaltung der erfindungsgemäßen Kolbenpumpe kann das erste Kolbenelement lose mit dem zweiten Kolbenelement gekoppelt werden. Alternativ kann das erste Kolbenelement formschlüssig und/oder kraftschlüssig mit dem zweiten Kolbenelement gekoppelt werden. Das erste Kolbenelement ist beispielsweise als zylindrische Nadelrolle ausgeführt und steht in vorteilhafter Weise als in Massenfertigung hergestelltes Normteil zur Verfügung. Da eine Übertragung der Antriebskraft eines Exzenters über eine Linienberührung auf dem als massive Metallnadelrolle, vorzugsweise als Stahlnadelrolle ausgeführten ersten Kolbenteils erfolgt, kann der Verschleiß in vorteilhafter Weise reduziert werden.

Vorteilhafte, nachfolgend beschriebene Ausführungsformen der Erfindung sowie die zu deren besserem Verständnis oben erläuterten, herkömmlichen Ausführungsbeispiele sind in den Zeichnungen dargestellt. In den Zeichnungen bezeichnen gleiche Bezugszeichen Komponenten bzw. Elemente, die gleiche bzw. analoge Funktionen ausführen.

### Kurze Beschreibung der Zeichnungen

Fig. 1 zeigt eine schematische perspektivische Darstellung einer herkömmlichen Kolbenpumpe.
Fig. 2 zeigt eine schematische Schnittdarstellung einer herkömmlichen Kolbenpumpe.
Fig. 3 zeigt eine schematische perspektivische Darstellung der Komponenten eines Einlassventils für die herkömmliche Kolbenpumpe gemäß Fig. 1 oder 2.
Fig. 4 zeigt eine schematische perspektivische Darstellung der Komponenten eines Einlassventils für eine erfindungsgemäße Kolbenpumpe.
Fig. 5 zeigt eine schematische Schnittdarstellung eines Kompressionsbereichs einer erfindungsgemäßen Kolbenpumpe.

### Ausführungsformen der Erfindung

Eine erfindungsgemäße Kolbenpumpe, die als Rückförderpumpe in einem Fahrzeugbremssystem eingesetzt werden kann, umfasst im Wesentlichen die gleichen Komponenten wie die unter Bezugnahem auf Fig. 1 bis 3 beschriebene herkömmliche Kolbenpumpe 1. Daher werden hier zur Vermeidung von Textwiederholungen nur die wesentlichen Unterschiede zwischen der erfindungsgemäßen Kolbenpumpe und der herkömmlichen Kolbenpumpe 1 gemäß Fig. 1 bis 3 detailliert beschrieben. Im Unterschied zur herkömmlichen Kolbenpumpe 1 gemäß Fig. 1 bis 3, umfasst die erfindungsgemäße Kolbenpumpe ein verbessertes Einlassventil in Kombination mit einer verbesserten Kolbenbaugruppe.

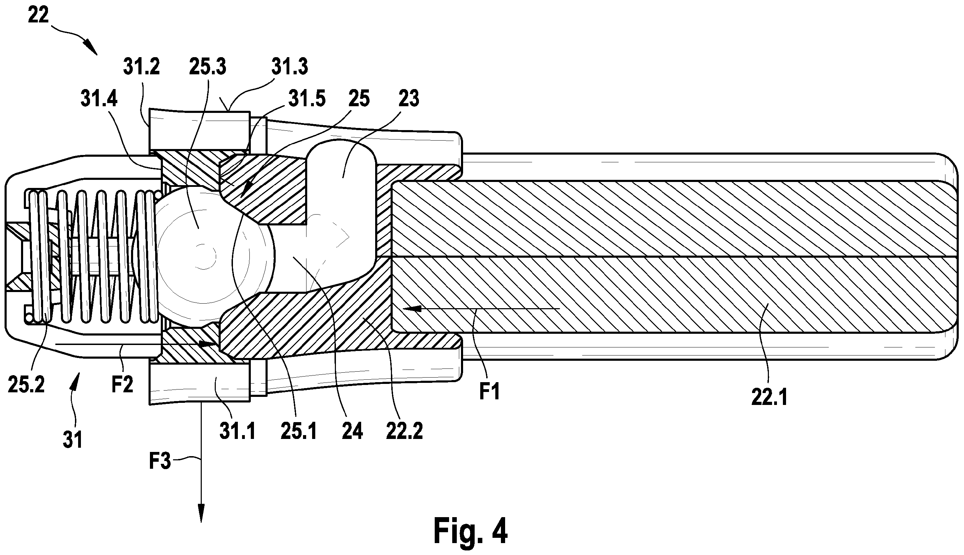

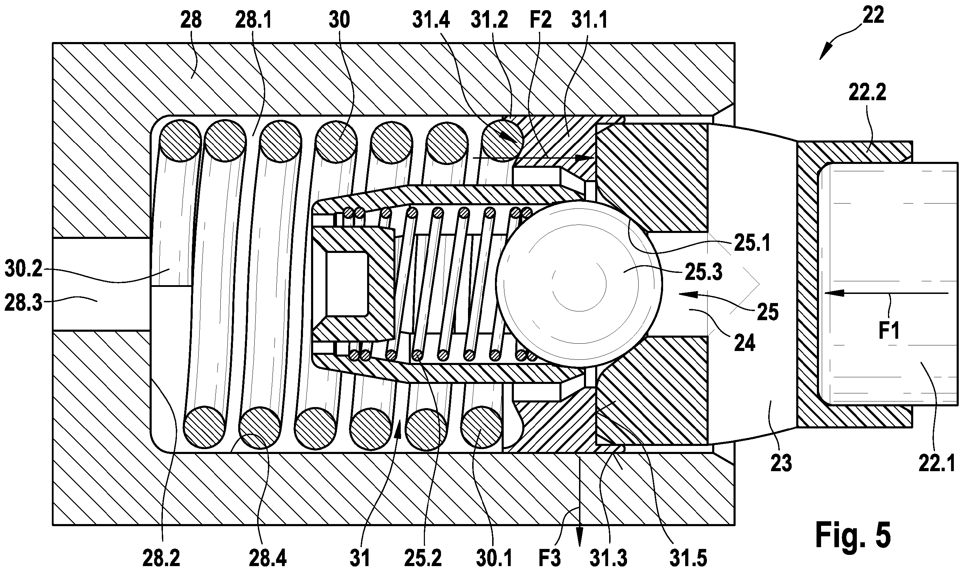

Wie aus Fig. 4 ersichtlich ist, umfasst das Einlassventil 25 der erfindungsgemäßen Kolbenpumpe analog zur herkömmlichen Kolbenpumpe 1 ein Käfigelement 31, in dem eine Einlassventilfeder 25.2 und ein Einlassventildichtelement 25.3, das beispielsweise als Dichtkugel ausgeführt ist, angeordnet ist, und einen korrespondierenden Einlassventilsitz 25.1, der an einem zweiten Kolbenelement 22.2 einer Kolbenbaugruppe 22 angeordnet ist, wobei das Einlassventildichtelement 25.3 durch eine Federkraft der Einlassventilfeder 25.2 dichtend in den korrespondierenden Einlassventilsitz 25.1 gedrückt werden kann. Die Kolbenbaugruppe 22 umfasst ein erstes Kolbenelement 22.1, das hier beispielhaft als zylindrische Nadelrolle ausgeführt ist, und das zweite Kolbenelement 22.2, wobei der Einlassventilsitz 25.1 aus einem verschleißfesten bzw. aus einem harten Material besteht. Im Unterschied zur herkömmlichen Kolbenpumpe 1 weist das Käfigelement 31 der erfindungsgemäßen Kolbenpumpe ein elastisches Hochdruckdichtelement 31.1 auf, das ausgeführt ist, um radial wirkende Kraftkomponenten F3 aufzunehmen und über eine radiale Dichtfläche 31.3 gegen eine in Fig. 5 dargestellte Zylinderwand 28.4 abzudichten und über eine axiale Dichtfläche 31.5 gegen die Kolbenbaugruppe 22 axial abzudichten, d.h. gegen das zweite Kolbenelement 22.2, das an der axialen Dichtfläche 31.5 anliegt.

Das zweite Kolbenelement 22.2 nimmt im Unterschied zur herkömmlichen Kolbenpumpe 1 nur noch die axial wirkenden Kraftkomponenten F1 und F2 auf, so dass im zweiten Kolbenelement 22.2 eine Längsbohrung 24 und mit der Längsbohrung 24 korrespondierende Querbohrungen 23 eingebracht werden können, ohne die Stabilität und Festigkeit des zweiten Kolbenelements 22.2 negativ zu beeinflussen. Im dargestellten Ausführungsbeispiel sind das Käfigelement 31 mit dem elastischen Hochdruckdichtelement 31.1 und das zweite Kolbenelement 22.2 mit dem Einlassventilsitz 25.1 als Kunststoffspritzteile ausgeführt, wodurch in vorteilhafter Weise eine einfache, kostengünstige Herstellung der Bauelemente ermöglicht wird, wobei eine komplexe Formgestaltung möglich ist. Zudem ist das erste Kolbenelement 22.1 im dargestellten Ausführungsbeispiel fest mit dem zweiten Kolbenelement 22.2 gekoppelt. Bei einer nicht dargestellten Ausführungsform kann das erste Kolbenelement 22.1 lose mit dem zweiten Kolbenelement 22.2 gekoppelt werden. Insgesamt ermöglicht die erfindungsgemäße Ausführung des Einlassventils 25 in Kombination mit der Kolbenbaugruppe 22 eine extreme Kostenreduzierung der Kolbenpumpe und eine einfache Montage. Zudem stellt die erfindungsgemäße Kolbenpumpe ein verbessertes Saugverhalten, eine höhere Druckbeständigkeit und durch die Anordnungen der Querbohrungen 23 im zweiten Kolbenelement 22 einen extrem kurzen Einlassbereich zur Verfügung.

Wie aus Fig. 5 ersichtlich ist, ist die Kolbenbaugruppe 22 mit dem Einlassventil 25 längsbeweglich in einem Zylinder 28 geführt, wobei während eines Saughubs der Kolbenbaugruppe 22 Fluid durch die Querbohrungen 23 im zweiten Kolbenelement 22.2 radial angesaugt und über die mit den Querbohrungen 23 korrespondierende Längsbohrung 24 durch das geöffnete Einlassventil 25 in einen Kompressionsraum 28.1 geführt wird. Nach Erreichen eines oberen Totpunktes kehrt sich die Bewegungsrichtung der Kolbengruppe 22 um, so dass das zweite Kolbenelement 22.2 mit dem Einlassventilsitz 25.1 über das durch einen nicht dargestellten Exzenter angetriebene erste Kolbenelement 22.1 dichtend auf das Einlassventildichtelement 25.3 gedrückt wird und das Einlassventils 25 geschlossen wird. Nun erfolgt im Kompressionsraum 28.1 so lange ein Druckaufbau, bis der Druck im Kompressionsraum 28.1 größer als die Federkraft eines nicht dargestellten Auslassventils ist, wodurch das unter Druck stehende Fluid über eine Auslassöffnung 28.3 und das geöffnete Auslassventil aus dem Druckraum 28.1 in eine nicht dargestellte Auslassleitung geleitet wird.

Nach Erreichen des unteren Totpunktes kehrt sich die Bewegungsrichtung der Kolbengruppe 22 wieder um, so dass das Auslassventil wieder schließt und der Ansaughub wieder beginnt, wobei eine Rückstellkraft F2 einer im Kompressionsraum 28.1 angeordneten Rückstellfeder 30, die beispielsweise als Spiralfeder ausgeführt ist, gegen einen radialen Auflagebereich 31.4 drückt, der am Hochdruckdichtelement 31.1 angeordnet ist. Die Rückstellkraft F2 wirkt über das Hochdruckdichtelement 31.1 und die axiale Dichtfläche 31.5 axial auf das zweite Kolbenelement 22.2, wodurch die Kolbenbaugruppe 22 wieder in Richtung oberer Totpunkt bewegt wird. Der radiale Aufnahmebereich 31.4 ist zur Aufnahme und Zentrierung einer oberen Endwindung 30.1 der Rückstellfeder beispielsweise als radiale Aufnahmenut ausgeführt, in der sich die als Spiralfeder ausgeführte Rückstellfeder 30 mit der oberen Endwindung 30.1 abstützt. Über ein untere Endwindung 30.2 stützt sich die Rückstellfeder auf einem Zylinderboden 28.2 ab. Wie weiter aus Fig. 5 ersichtlich ist, ist die radiale Ringnut 31.4 am äußeren Rand als flexible Dichtlippe 31.2 ausgeformt, die den Kompressionsraum 28.1 zur Zylinderwand 28.4 druckdicht abschließt. Da das elastische Hochdruckdichtelement 31.1 zwischen der metallischen Rückstellfeder 30 und dem aus einem verschleißbeständigen und somit härteren Material hergestellten zweiten Kolbenelement 22.2 angeordnet ist, wird die radiale Dichtfläche 31.3 druckbedingt aufgeweitet, so dass das Hochdruckdichtelement 31.1 mit seinem vollständigen radialen Außendurchmesser dichtend an der Zylinderwand 28.4 anliegt. Während der Kompression des in den Kompressionsraum 28.1 eingesaugten Fluids dichtet das Hochdruckdichtelement 31.1 über die radiale Dichtfläche 31.3 radial gegen die Zylinderwand 28.4 und durch die axiale Dichtfläche 31.5 gegen das zweite Kolbenelement 22.2 ab. Zusätzlich dichtet das Einlassventildichtelement 25.3 axial gegen den Einlassventilsitz 25.1 im ersten Kolbenelement 22.2 ab.

In der erfindungsgemäßen Kolbenpumpe werden die axialen und radialen Druckkräftekomponenten auf je ein Bauteil aufgeteilt, was in vorteilhafter Weise zu einer Reduzierung der Bauteilbelastungen in Bezug auf Dehnung und Spannung führt und die Ausführung der Bauteile mit einer geringeren Bauteilfestigkeit ermöglicht. Insgesamt ermöglicht die Erfindung eine kostengünstige und bauraumoptimierte Kolbenpumpe mit einfach herzustellenden Bauteilen, die beispielsweise als Kunststoffspritzteile ausgeführt sind. Die erfindungsgemäße Kolbenpumpe weist in vorteilhafter Weise ein verbessertes Saugverhalten, eine Druckbeständig gegen 250 bar und einen extrem kurzen Einlassbereich auf.

## Patentansprüche

1. Kolbenpumpe mit einer Kolbenbaugruppe (22), die mindestens eine Querbohrung (23) und eine mit der mindestens einen Querbohrung (23) korrespondierende Längsbohrung (24) aufweist, einem Zylinder (28), in welchem die Kolbenbaugruppe (22) längsbeweglich geführt ist, und einem Einlassventil (25), das ein Käfigelement (31), in dem eine Einlassventilfeder (25.2) und ein Einlassventildichtelement (25.3) angeordnet ist, und einen korrespondierenden Einlassventilsitz (25.1) umfasst, der an der Kolbenbaugruppe (22) angeordnet ist, wobei das Einlassventildichtelement (25.3) durch eine Federkraft der Einlassventilfeder (25.2) dichtend in den korrespondierenden Einlassventilsitz (25.1) drückbar ist, um die Längsbohrung (24) zu verschließen, wobei über die in der Kolbenbaugruppe (22) angeordnete mindestens eine Querbohrung (23) Fluid ansaugbar ist, das durch die Längsbohrung (24) über das Einlassventil (25) in einen Kompressionsraum (28.1) leitbar ist, in dem eine Rückstellfeder (30) für die Kolbenbaugruppe (22) angeordnet ist,
wobei das Käfigelement (31) ein elastisches Hochdruckdichtelement (31.1) aufweist, das ausgeführt ist, um radial wirkende Kraftkomponenten aufzunehmen und um über eine radiale Dichtfläche (31.3) gegen eine Zylinderwand (28.4) abzudichten und um über eine axiale Dichtfläche (31.5) gegen die Kolbenbaugruppe (22) axial abzudichten, wobei das elastische Hochdruckdichtelement (31.1) zur Zylinderwand (28.4) hin einen radialen Auflagebereich (31.4) aufweist, an dem eine obere Endwindung (30.1) der Rückstellfeder (30) aufgenommen und zentriert ist, **dadurch gekennzeichnet, dass** die radiale Dichtfläche (31.3) durch eine druckbedingte Aufweitung des Hochdruckdichtelements (31.1) derart ausformbar ist, dass das Hochdruckdichtelement (31.1) mit seinem vollständigen radialen Außendurchmesser dichtend an der Zylinderwand (28.4) anliegt.

2. Kolbenpumpe nach Anspruch 1, **dadurch gekennzeichnet, dass** die Kolbenbaugruppe (22) ein erstes Kolbenelement (22.1) und ein zweites Kolbenelement (22.2) umfasst, wobei der Einlassventilsitz (25.1) aus einem verschleißfesten Material besteht, wobei das zweite Kolbenelement (22.2) axial wirkende Kraftkomponenten aufnimmt, wobei im zweiten Kolbenelement (22.2) die mit der Längsbohrung (24) korrespondierende mindestens eine Querbohrung (23) eingebracht ist, und wobei das elastische Hochdruckdichtelement (31.1) über die axiale Dichtfläche (31.5) gegen das zweite Kolbenelement (22.2) axial abdichtet.

3. Kolbenpumpe nach Anspruch 1 oder 2, **dadurch gekennzeichnet, dass** der radiale Auflagebereich (31.4) als radiale Aufnahmenut ausgeführt ist, die am äußeren Rand als flexible Dichtlippe (31.2) ausgeformt ist, die den Kompressionsraum (28.1) zur Zylinderwand (28.4) druckdicht abschließt.

4. Kolbenpumpe nach Anspruch 2 oder 3, **dadurch gekennzeichnet, dass** das Käfigelement (31) mit dem elastischen Hochdruckdichtelement (31.1) und das zweite Kolbenelement (22.2) mit dem Einlassventilsitz (25.1) als Kunststoffspritzteile ausgeführt sind.

5. Kolbenpumpe nach einem der Ansprüche 2 bis 4, **dadurch gekennzeichnet, dass** das erste Kolbenelement (22.1) lose mit dem zweiten Kolbenelement (22.2) gekoppelt ist.

6. Kolbenpumpe nach einem der Ansprüche 2 bis 4, **dadurch gekennzeichnet, dass** das erste Kolbenelement (22.1) formschlüssig und/oder kraftschlüssig mit dem zweiten Kolbenelement (22.2) gekoppelt ist.

7. Kolbenpumpe nach einem der Ansprüche 2 bis 6, **dadurch gekennzeichnet, dass** das erste Kolbenelement (22.1) als zylindrische Nadelrolle ausgeführt ist.

8. Bremssystem für ein Fahrzeug, **gekennzeichnet durch** eine Rückförderpumpe, die als Kolbenpumpe (1) nach einem der Ansprüche 1 bis 7 ausgeführt ist.

## Claims

1. Piston pump having a piston assembly (22), which has at least one transverse bore (23) and one longitudinal bore (24) corresponding to the at least one transverse bore (23), having a cylinder (28), in which the piston assembly (22) is guided in longitudinally movable fashion, and having an inlet valve (25), which comprises a cage element (31), in which an inlet valve spring (25.2) and an inlet valve sealing element (25.3) are arranged, and a corresponding inlet valve seat (25.1), which is arranged on the piston assembly (22), wherein the inlet valve sealing element (25.3) can, by means of a spring force of the inlet valve spring (25.2), be pressed sealingly into the corresponding inlet valve seat (25.1) in order to close off the longitudinal bore (24), wherein fluid can be drawn in via the at least one transverse bore (23) arranged in the piston assembly (22), which fluid can be conducted through the longitudinal bore (24) via the inlet valve (25) into a compression chamber (28.1), in which a restoring spring (30) for the piston assembly (22) is arranged,
wherein the cage element (31) has an elastic high-pressure sealing element (31.1) which is designed to absorb radially acting force components and to seal by means of a radial sealing surface (31.3) against a cylinder wall (28.4) and to seal axially by means of an axial sealing surface (31.5) against the piston assembly (22), wherein the elastic high-pressure sealing element (31.1) has, towards the cylinder wall (28.4), a radial contact region (31.4) on which an upper end winding (30.1) of the restoring spring (30) is held and centred, **characterized in that** the radial sealing surface (31.3) can, by means of a pressure-induced expansion of the high-pressure sealing element (31.1), be formed such that the high-pressure sealing element (31.1) bears with its entire radial outer diameter sealingly against the cylinder wall (28.4).

2. Piston pump according to Claim 1, **characterized in that** the piston assembly (22) comprises a first piston element (22.1) and a second piston element (22.2), wherein the inlet valve seat (25.1) is composed of a wear-resistant material, wherein the second piston element (22.2) absorbs axially acting force components, wherein at least one transverse bore (23) corresponding to the longitudinal bore (24) is formed in the second piston element (22.2), and wherein the elastic high-pressure sealing element (31.1) seals axially by means of the axial sealing surface (31.5) against the second piston element (22.2).

3. Piston pump according to Claim 1 or 2, **characterized in that** the radial contact region (31.4) is formed as a radial receiving groove which is formed at the outer edge as a flexible sealing lip (31.2) which closes off the compression chamber (28.1) towards the cylinder wall (28.4) in pressure-tight fashion.

4. Piston pump according to Claim 2 or 3, **characterized in that** the cage element (31) with the elastic high-pressure sealing element (31.1) and the second piston element (22.2) with the inlet valves seat (25.1) are formed as plastics injection-moulded parts.

5. Piston pump according to one of Claims 2 to 4, **characterized in that** the first piston element (22.1) is coupled loosely to the second piston element (22.2).

6. Piston pump according to one of Claims 2 to 4, **characterized in that** the first piston element (22.1) is coupled in positively locking and/or non-positively locking fashion to the second piston element (22.2).

7. Piston pump according to one of Claims 2 to 6, **characterized in that** the first piston element (22.1) is formed as a cylindrical needle roller.

8. Brake system for a vehicle, **characterized by** a return delivery pump which is formed as a piston pump (1) according to one of Claims 1 to 7.

## Revendications

1. Pompe à piston comprenant un module de piston (22) qui présente au moins un alésage transversal (23) et un alésage longitudinal (24) correspondant à l'au moins un alésage transversal (23), un cylindre (28) dans lequel le module de piston (22) est guidé de manière déplaçable longitudinalement, et une soupape d'admission (25) qui comprend un élément de cage (31) dans lequel est disposé un ressort de soupape d'admission (25.2) et un élément d'étanchéité de soupape d'admission (25.3), et un siège de soupape d'admission correspondant (25.1), qui est disposé au niveau du module de piston (22), l'élément d'étanchéité de soupape d'admission (25.3) pouvant être pressé de manière hermétique par une force de ressort du ressort de soupape d'admission (25.2) dans le siège de soupape d'admission correspondant (25.1), afin de fermer l'alésage longitudinal (24), du fluide pouvant être aspiré par le biais de l'au moins un alésage transversal (23) disposé dans le module de piston (22), lequel peut être conduit à travers l'alésage longitudinal (24) par le biais de la soupape d'admission (25) dans un espace de compression (28.1) dans lequel est disposé un ressort de rappel (30) pour le module de piston (22),
l'élément de cage (31) présentant un élément d'étanchéité à haute pression élastique (31.1) qui est réalisé de manière à recevoir des composantes de force agissant radialement et à réaliser l'étanchéité vis-à-vis d'une paroi de cylindre (28.4) par le biais d'une surface d'étanchéité radiale (31.3) et à réaliser l'étanchéité axialement vis-à-vis du module de piston (22) par le biais d'une surface d'étanchéité axiale (31.5), l'élément d'étanchéité à haute pression élastique (31.1) présentant vers la paroi de cylindre (28.4) une région d'appui radiale (31.4) au niveau de laquelle est reçu et centré un enroulement d'extrémité supérieur (30.1) du ressort de rappel (30), **caractérisée en ce que** la surface d'étanchéité radiale (31.3) peut être formée par un élargissement causé par la pression de l'élément d'étanchéité à haute pression (31.1), de telle sorte que l'élément d'étanchéité à haute pression (31.1) s'applique avec son diamètre extérieur radial complet de manière hermétique contre la paroi de cylindre (28.4).

2. Pompe à piston selon la revendication 1, **caractérisée en ce que** le module de piston (22) comprend un premier élément de piston (22.1) et un deuxième élément de piston (22.2), le siège de soupape d'admission (25.1) se composant d'un matériau résistant à l'usure, le deuxième élément de piston (22.2) recevant des composantes de forces agissant axialement, l'au moins un alésage transversal (23) correspondant à l'alésage longitudinal (24) étant introduit dans le deuxième élément de piston (22.2), et l'élément d'étanchéité à haute pression élastique (31.1) réalisant l'étanchéité axialement vis-à-vis du deuxième élément de piston (22.2) par le biais de la surface d'étanchéité axiale (31.5).

3. Pompe à piston selon la revendication 1 ou 2, **caractérisée en ce que** la région d'appui radiale (31.4) est réalisée sous forme de rainure de réception radiale qui est formée au niveau du bord extérieur en tant que lèvre d'étanchéité flexible (31.2), qui ferme de manière étanche à la pression l'espace de compression (28.1) par rapport à la paroi de cylindre (28.4).

4. Pompe à piston selon la revendication 2 ou 3, **caractérisée en ce que** l'élément de cage (31) avec l'élément d'étanchéité à haute pression élastique (31.1) et le deuxième élément de piston (22.2) avec le siège de soupape d'admission (25.1) sont réalisés sous forme de pièces moulées par injection de plastique.

5. Pompe à piston selon l'une quelconque des revendications 2 à 4, **caractérisée en ce que** le premier élément de piston (22.1) est accouplé lâchement au deuxième élément de piston (22.2).

6. Pompe à piston selon l'une quelconque des revendications 2 à 4, **caractérisée en ce que** le premier élément de piston (22.1) est accouplé par engagement par correspondance de formes et/ou par force au deuxième élément de piston (22.2).

7. Pompe à piston selon l'une quelconque des revendications 2 à 6, **caractérisée en ce que** le premier élément de piston (22.1) est réalisé sous forme de rouleau à aiguilles cylindrique.

8. Système de freinage pour un véhicule, **caractérisé par** une pompe de refoulement qui est réalisée sous forme de pompe à piston (1) selon l'une quelconque des revendications 1 à 7.
